# EUROPEAN PATENT SPECIFICATION

(11) **EP 2 985 245 B1**
(45) Date of publication and mention of the grant of the patent: **24.10.2018**
(21) Application number: 15175521.2
(22) Date of filing: 06.07.2015
(51) Int. Cl.: B65G 39/00, B65G 13/07

(54) **ROLLER DRIVEN DEVICE FOR ROLLER CONVEYORS**
ROLLENANGETRIEBENE VORRICHTUNG FÜR ROLLENFÖRDERER
DISPOSITIF À ROULEAU ENTRAÎNÉ POUR TRANSPORTEURS À ROULEAUX

(30) Priority: 08.07.2014 IT BO20140380
(43) Date of publication of application: 17.02.2016
(73) Proprietor: Dugomrulli S.p.A., 40069 Zola Predosa (BO) (IT)
(72) Inventor: Gamberini, Giorgio, 40069 ZOLA PREDOSA (BO) (IT)
(74) Representative: Negrini, Elena

(56) References cited:
- DE-A1- 19 823 430
- US-A1- 2006 102 451
- US-A1- 2008 010 831
- US-A1- 2008 236 998

## Description

The present invention concerns the technical field of the roller conveyor for transporting goods possibly supported by frames, slides or pallets and it refers to a roller driven device, in other words to a motorized roller, for roller conveyors.
Roller driven device are known, each of them comprising a tubular cylindrical roller supported, through bearing, by an axis or by another kind of support; each end of the roller is provided with a respective wheel or bushing (in the following the latter element will be named "wheel"). Said known devices further comprise a single or double pulley fixed to the external surface of the cylindrical roller adjacent to one of the side wheels; said pulley usually is a timing pulley for a timing belts, and it transmits to the device the motion for the rotation of the device around the axis of the roller provided by the belt engaged to the drive pulley of an engine.
In some of said roller devices the pulley is fixed more possible close to the respective wheel and it is fixed to the roller by means of an annular welding made at the external end, in other word the end closed to the wheel, of the pulley whose opposite end is not welded to preserve the roller strength in its area more affected by flexion and stresses; said solution avoids weakening of the roller but because of the close distance between the pulley and the adjacent inner flange of the wheel, do not allow to weld said inner flange to the roller on the contrary to the inner flange of the opposite wheel of the device.
A drawback of said known solution consists in that, in the event of abnormal and/or very high and/or with axial components stresses, acting on the wheel adjacent to the pulley, the connection between said wheel and the roller could be damaged.
The document US2008/010831 discloses a roller driven device having the features of the preamble of claim 1 and claim 2.

The document US2006/102451 discloses roller driven device for roller conveyors comprising a tubular roller, freely rotating around its geometric axis and having at each end a respective lateral wheel each comprising a tubular cylindrical element 12b having an external protruding flange and an internal flange where the tubular cylindrical element and the two flanges are integral. Said roller driven device comprises a timing pulley adjacent to a first lateral wheel and a sleeve inside the timing pulley and to the first lateral wheel and containing a respective end of the tubular roller. Said end of the tubular roller is welded to the inner surface of the sleeve. The end of the sleeve can be welded inside the inner cavity of the first wheel (as shown in figures 1A and 1B of document US2006/102451) or to the side external surface of the external protruding flange of the first wheel (as shown in figures 2A and 2B of document US2006/102451); in this latter case the end of the roller and the respective welding to the inner surface of the sleeve is quite deep inside the sleeve, at least to leave space for the bearings.

Both solutions are affected by the difficult to carry out inner weldings.

A further drawback of both solutions consists in that no direct welding or direct fixing are carried out between the roller and the first wheel.

Another drawback of both solutions consists in that provide only one (indirect) connection between the roller and the first wheel.

A further drawback of both solutions consists in that the end of the sleeve opposed to the first wheel must be welded to the roller close to the median portion thereof increasing the risks to weak the roller in said critical position.

A drawback of the first known solution consists in that the first wheel must be solid to provide the welding surface and must be complex and expensive because of the bearing housing carried out in the body of the first wheel.

A drawback of the second known solution consists in that the fixing of the first wheel to the roller is made by two sequential and spaced welding increasing the risk of mispositioning and/or misalignment.

An object of the following claim 1 and claim 2 is to overcome the drawback of the second mentioned document.
An object of the present invention is to propose a device that can support very strong stresses.
Further object is to propose a device easy to be manufactured.
Another object is to propose a device provided with very light weight but with strong side wheels.
The features of the invention are highlighted in the following with references to the enclosed drawings where:
- Figure 1 shows a partial view of the device of the present invention sectioned by an axial plane;
- Figure 2 shows a sectional view of a pulley means of Figure 1;
- Figure 3A shows a partial and sectional view of a first manufacture phase of the device of the present invention;
- Figure 3B shows a partial and sectional view of a second manufacture phase of the device of the present invention;
- Figure 3C shows a partial and sectional view of a third manufacture phase of the device of the present invention;
- Figure 4 shows a partial and sectional view of a variant of the device of figure 1;
- Figure 5 shows an annular means and a pulley means of figure 4;
- Figure 6 shows a partial sectional view of a further variant of the device of figure 1;
- Figure 7 shows an enlargement of a detail of figure 6.
With reference to figures 1 - 3C, numeral 1 indicates the roller driven device, of the present invention, for roller conveyors.
Said roller driven device 1 comprises a cylindrical and tubular roller means 3, rotating around its geometric axis and having at each end a respective first 4 and second 5 lateral wheel means.
At least the first wheel means has a tubular cylindrical element 6, whose diameter is larger than the diameter of the roller means 3, said tubular cylindrical element 6 having at its end facing the opposed second wheel means 5 a first flange means 8 and at the opposite end a second flange means 7; both the flange means 8, 7 are annulus shaped. The thickness of the tubular cylindrical element 6 and of the flange means 8, 7 preferably ranges from 1 mm to 10 mm.
Said device 1 further comprises a pulley means 9 fixed to the outer surface of the roller means 3 adjacent to the first wheel means 4 to transmit to the device, via a belt or the like, an axial rotary motion.
The device 1 further comprises a ring means 11 whose axial length ranges from two third to one twentieth of the axial distance between said first 8 and second 7 flange means of the first wheel means 4.
The diameter of the central hole of the second flange means 7 is almost equal to the external diameter of the roller means 3 and the diameter of the central hole of the first flange means 8 is almost equal to the external diameter of the ring means 11.
The ring means 11 is interposed between the first flange means 8 and the roller means 3 ant it 11 is fixed to said flange 8 and to the roller means 3; more in detail the outer surface of the ring means 11 is engaged and welded to the central hole of the first flange means 8; consequently an end of the ring means 11 is sited between the first 8 and second 7 flange means and said end of the ring means 11 is welded to the outer surface of the roller means 3.

The end portion of the roller means 3 opposed to the second wheel means 5 is fixed to the central hole of the second flange means 7 of the first wheel means 4.

The fixing of the outer surface of the ring means 11 to the central hole of the first flange means 8 is carried out between said outer surface of the ring means 11 and the surface of the first flange means 8 around the respective hole and opposite to the second flange means 7.

The fixing of the end portion of the roller means 3 to the central hole of the second flange means 7 is carried out between the outer surface of the end portion of the roller means 3 and the surface of the second flange means 7 around the respective hole and opposite the first flange means 8.

The roller means 3, the ring means 11 and at least the flanges means 8, 7 are made of metal, preferably of iron, and the fixings of the end of the ring means 11 to the outer surface of the roller means 3, of the outer surface of the ring means 11 to the surface of the first flange means 8 around the respective hole and opposite to the second flange means 7 and of the outer surface of the end portion of the tubular roller means 3 to the surface of the second flange means 7 around the respective hole and opposite to the first flange means 8, are carried out by the welding of the kind that provides melting of the base metal and addition to the joint of a metal filler material.

Must be noted that the above described solution provides only easy to perform weldings and avoid difficult to carry out inner weldings.

The solution in object provides a double fixing of the first wheel to the roller means and one of said fixing is direct between the two parts and furthermore provides welded fixings only on the portion of the roller means 3 close to the first wheel means avoiding wildings in the most delicate portion of the roller means avoiding weakening of the latter.

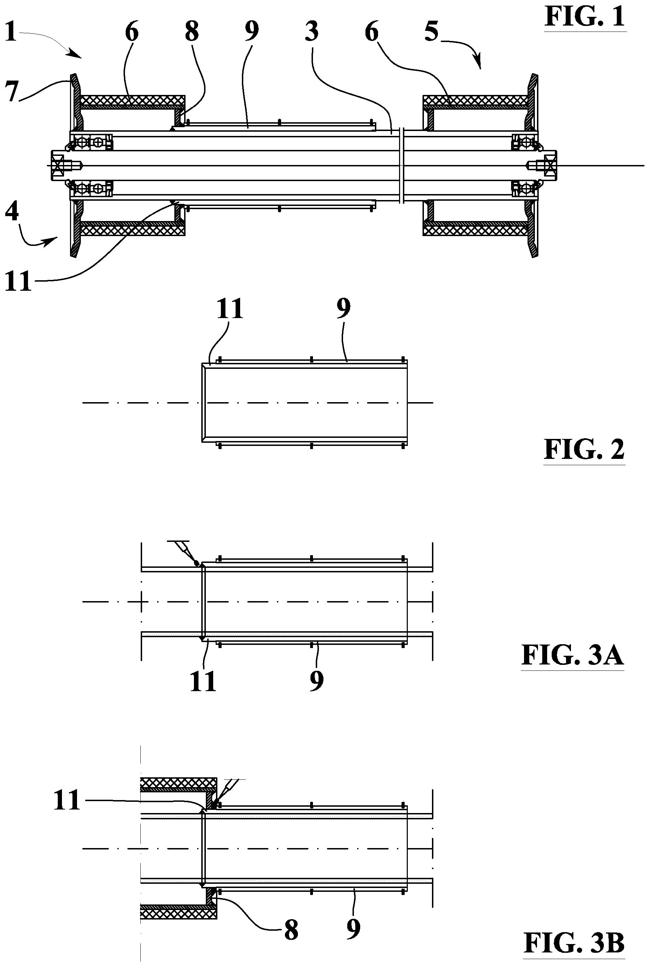

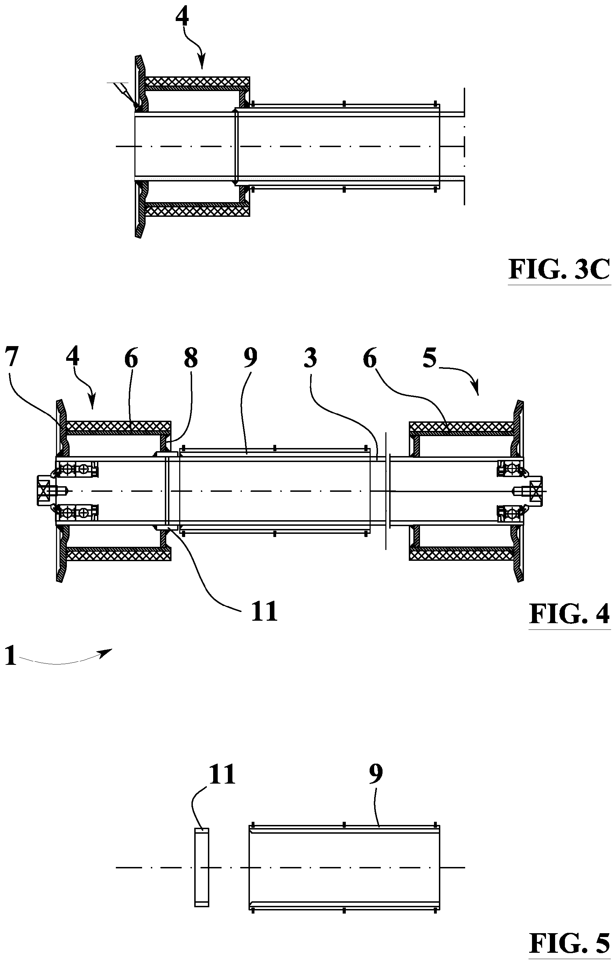

A further topic of the solution in object consists in that the wheel means can be made in a simple, light and cheap manner by welding to the each tubular cylindrical element 6 the two respective flange means.
Furthermore the solution in object allows an adequate precision of the fixing without needs of special and expensive provisions.
In the embodiment of figures 1 - 3C said annular means 11 is integral, or in other word in single body, with the pulley means 9 and protrudes outward an end of the latter.
The roller means 3 is provided with an annulus shoulder, for instance carried out on the roller means by turning process; said annulus shoulder matches with the inner end portion of the pulley means opposed to the ring means centering, with reduced play, the pulley means in respect to the roller means 3.
Preferably the pulley means 9 is timing type, preferably with two sets of teeth, for two not illustrated timing belts operated by an engine, for instance of electric kind. Preferably, each tubular cylinder 6 of the wheel means 4, 5 is provided with a respective anti-slip synthetic coating and the second flange means 7 radially protrudes in respect to the respective tubular cylinder 6 to provide a guide or a side stopper for the load.
The inner end portions of the roller means consist in a housing for respective bearings assigned to the free rotating support of the device.
In the variant of figures 4 and 5 the ring means 11 consists in an independent tubular cylindrical element separated from the pulley means.
In this variant, the end of the pulley means 9 adjacent to the ring means 11 is fixed, by welding, to the outer surface of the roller means 3. In alternative, the invention further provides that the ring means 11 is integral with the rolling means 3, in this case the ring means 11 can be carried out in the same phase and with the same tool for carrying out the annulus shoulder.

Must be noted that all the fixing weldings of the device can be carried out in respective concave annular sides easily accessible for the manual and automatic welding tools.

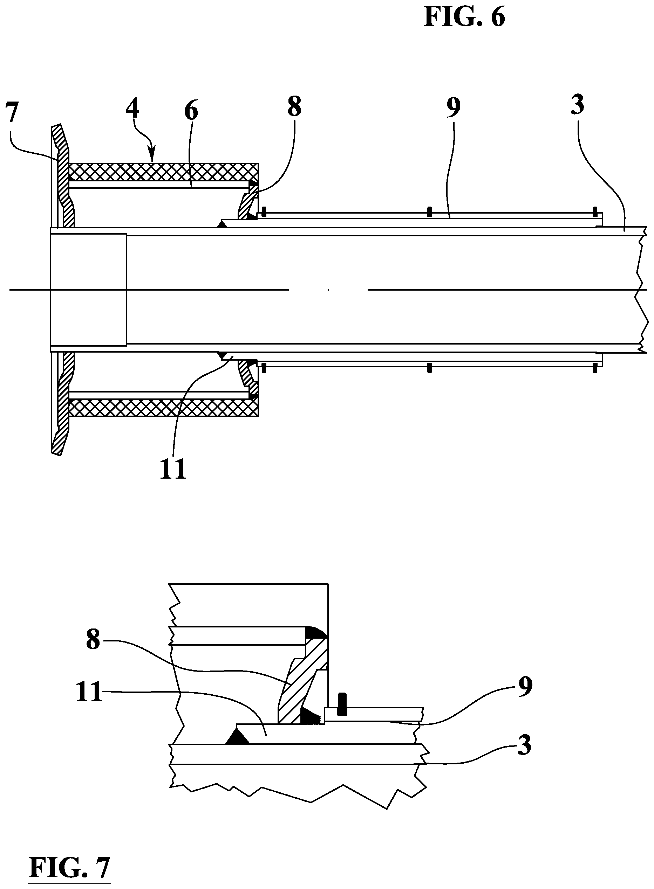

In the variant of figures 6 and 7 the first flange means 8 of at least the first lateral wheel means 4 is concave shaped with the concavity facing the opposite second wheel means 5; consequently the central hole of the first flange means 8 is shifted toward the external end of the respective ring means 11.

The welding between the first flange means 8 and the tubular cylindrical element 6 can be carried out at the inner end of the latter 6.

This arrangement facilitates the welding of the first flange means 8 to the respective ring means 11 particularly when the latter 11 is integral with the pulley means 9 as illustrated in the figures 6 and 7, and it facilitates the welding between the first flange means 8 and the respective tubular cylindrical element 6.

The method to make the device provides:
- to insert the pulley means 9 and the ring means 11 on the roller means 3 and to weld them 9, 11 to said roller means 3,
- to insert the first wheel means 4 on the respective roller means 3 end portions and to weld the first flange means 8 to the ring means 11;
- to weld the remaining second flange means 7 of the first wheel means 4 to the roller means 3;
- to insert and to weld the second wheel means 5 to the end portion of the roller means 3 opposite to the first wheel means 4.

## Claims

1. Roller driven device for roller conveyors comprising a cylindrical and tubular roller means (3) rotating around its geometric axis and having at each end a respective first (4) and second (5) lateral wheel means; at least the first wheel means has a tubular cylindrical element (6) having at its end facing the second wheel means (5) a first flange means (8) and at the opposite end a second flange means (7), both the flange means (8, 7) in the shape of a annulus, said device (1) further comprises a pulley means (9) fixed to the outer surface of the roller means (3) adjacent to the first wheel means (4) to transmit to the device, via a belt or the like, an axial rotary motion; said device (1) being **characterized in that** it comprises a ring means (11) whose axial length ranges from two third to one twentieth of the axial distance between said first (8) and second (7) flange means of the first wheel means (4), the outer surface of the ring means (11) is engaged and welded to a central hole of the first flange means (8), an end of the ring means (11) is sited between the first (8) and second (7) flange means and said end is welded to the outer surface of the roller means (3) whose end portion is fixed to the central hole of the second flange means (7).

2. Roller driven device for roller conveyors comprising a cylindrical and tubular roller means (3) rotating around its geometric axis and having at each end a respective first (4) and second (5) lateral wheel means; at least the first wheel means has a tubular cylindrical element (6) having at its end facing the second wheel means (5) a first flange means (8) and at the opposite end a second flange means (7), both the flange means (8, 7) in the shape of a annulus, said device (1) further comprises a pulley means (9) fixed to the outer surface of the roller means (3) adjacent to the first wheel means (4) to transmit to the device, via a belt or the like, an axial rotary motion; said device (1) being **characterized in that** it comprises a ring means (11) consisting of a cylindrical tubular element realized in single body with the pulley means (9) and projecting from the end of the latter adjacent to the first wheel means (4), the axial length of the ring means (11) ranges from two third to one twentieth of the axial distance between said first (8) and second (7) flange means of the first wheel means (4), the outer surface of the ring means (11) is engaged and welded to a central hole of the first flange means (8), an end of the ring means (11) is sited between the first (8) and second (7) flange means and said end is welded to the outer surface of the roller means (3) whose end portion is fixed to the central hole of the second flange means (7).

3. Device according to claim 1 or 2 **characterized in that** the welding of the outer surface of the ring means (11) to the central hole of the first flange means (8) is carried out between said outer surface of the ring means (11) and the surface of the first flange means (8) around the respective hole and opposite to the second flange means (7).

4. Device according to any claim 1 - 3 **characterized in that** the fixing of the end portion of the roller means (3) to the central hole of the second flange means (7) is carried out between the outer surface of the end portion of the roller means (3) and the surface of the second flange means (7) around the respective hole and opposite to the first flange means (8).

5. Device according to any claim 1 - 4 **characterized in that** the roller means (3), the ring means (11) and at least the flanges means (8, 7) are made of metal and the weldings of the end of the ring means (11) to the outer surface of the roller means (3), of the outer surface of the ring means (11) to the surface of the first flange means (8) around the respective hole and opposite to the second flange means (7) and the fixing of the outer surface of the end portion of the roller means (3) to the surface of the second flange means (7) around the respective hole and opposite the first flange means (8), are carried out by the welding of the kind that provides melting of the base metal and addition to the joint of a metal filler material.

6. Device according to claim 1 **characterized in that** the end of the pulley means (9) adjacent to the ring means (11), consisting of an independent tubular cylindrical element, is fixed to the outer surface of the roller means (3).

7. Device according to claim 1 or 2 **characterized in that** the inner end portion of the pulley means (9) opposite to the ring means (11) matches with the roller means (3) with a reduced play.

8. Device according to claim 1 or 2 **characterized in that** the pulley means (9) is a timing pulley type for timing belts.

9. Device according to claim 8 **characterized in that** the pulley means (9) has two sets of teeth for two belts.

10. Device according to claim 1 or 2 **characterized in that** each tubular cylindrical element (6) of the first and second lateral wheel means (4, 5) is provided with a respective anti-slip synthetic coating.

11. Device according to claim 1 or 2 **characterized in that** the second flange means (7) radially protrudes in respect to the respective tubular cylindrical element (6).

12. Device according to claim 1 or 2 **characterized in that** the inner end portions of the roller means (3) consist in a housing for respective free rotating bearings.

13. Device according to any of the preceding claims **characterized in that** the first flange means (8) of at least the first lateral wheel means (4) is concave shaped with the concavity facing the opposite second lateral wheel means (5).

14. Method to make a device according from claims 1 to 14 **characterized in**:
- to insert the pulley means (9) and the ring means (11) on the roller means (3) and to weld them (9,11) to said roller means (3);
- to insert the first lateral wheel means (4) on the respective roller means (3) end portions and to weld the first flange means (8) to the ring means (11);
- to weld the remaining second flange means (7) of the first lateral wheel means (4) to the roller means (3);
- to insert and to weld the second lateral wheel means (5) to the end portion of the roller means (3) opposite to the first lateral wheel means (4).

## Patentansprüche

1. Rollengetriebene Vorrichtung für Rollenförderer, umfassend ein zylindrisches und ein rohrförmiges Rollenmittel (3), das um seine geometrische Achse rotiert und an jedem Ende ein entsprechendes erstes (4) und zweites (5) laterales Radmittel aufweist;
wobei zumindest das erste Radmittel ein rohrförmiges zylindrisches Element (6) aufweist, das an seinem dem zweiten Radmittel (5) zugewandten Ende ein erstes Flanschmittel (8) und an dem gegenüberliegenden Ende ein zweites Flanschmittel (7) aufweist, wobei beide Flanschmittel (8, 7) die Form eines Ringes aufweisen, wobei die Vorrichtung (1) ferner ein an der äußeren Oberfläche des Rollenmittels (3) benachbart zu dem ersten Radmittel (4) befestigtes Riemenscheibenmittel (9) aufweist, um über einen Riemen oder dergleichen eine axiale Rotationsbewegung auf die Vorrichtung zu übertragen;
und die Vorrichtung (1) ist **dadurch gekennzeichnet, dass** sie ein Ringmittel (11) umfasst, dessen axiale Länge zwei Drittel bis ein Zwanzigstel des axialen Abstands zwischen dem ersten (8) und dem zweiten Flanschmittel (7) des ersten Radmittels (4) beträgt, die äußere Oberfläche des Ringmittels (11) mit einem zentralen Loch des ersten Flanschmittels (8) in Eingriff steht und verschweißt ist, ein Ende des Ringmittels (11) zwischen dem ersten (8) und dem zweiten Flanschmittel (7) angeordnet ist und dieses Ende mit der äußeren Oberfläche des Rollenmittels (3) verschweißt ist, dessen Endbereich an dem zentralen Loch des zweiten Flanschmittels (7) befestigt ist.

2. Rollengetriebene Vorrichtung für Rollenförderer, umfassend ein zylindrisches und rohrförmiges Rollenmittel (3), das um seine geometrische Achse rotiert und an jedem Ende jeweils ein erstes (4) und ein zweites laterales Radmittel (5) aufweist;
wobei zumindest das erste Radmittel ein rohrförmiges zylindrisches Element (6) umfasst, das an seinem dem zweiten Radmittel (5) zugewandten Ende ein erstes Flanschmittel (8) und an dem gegenüberliegenden Ende ein zweites Flanschmittel (7) aufweist, wobei beide Flanschmittel (8, 7) die Form eines Ringes aufweisen, wobei die Vorrichtung (1) ferner ein an der äußeren Oberfläche des Rollenmittels (3) benachbart zu dem ersten Radmittel (4) befestigtes Riemenscheibenmittel (9) aufweist, um über einen Riemen oder dergleichen eine axiale Rotationsbewegung auf die Vorrichtung zu übertragen;
und die Vorrichtung (1) ist **dadurch gekennzeichnet, dass** sie ein Ringmittel (11) umfasst, das aus einem zylindrischen rohrförmigen Element besteht, das in einem einteiligen Körper mit dem Riemenscheibenmittel (9) realisiert ist und von dem Ende benachbart zu dem ersten Radmittel (4) vorsteht, wobei die axiale Länge des Ringmittels (11) zwei Drittel bis ein Zwanzigstel des axialen Abstands zwischen dem ersten (8) und dem zweiten Flanschmittel (7) des ersten Radmittels (4) beträgt, die äußere Oberfläche des Ringmittels (11) mit einem zentralen Loch des ersten Flanschmittels (8) in Eingriff steht und verschweißt ist, ein Ende des Ringmittels (11) zwischen dem ersten (8) und zweiten Flanschmittel (7) angeordnet ist und das Ende mit der äußeren Oberfläche des Rollenmittels (3) verschweißt ist, dessen Endbereich an dem zentralen Loch des zweiten Flanschmittels (7) befestigt ist.

3. Die Vorrichtung gemäß Anspruch 1 oder 2, **dadurch gekennzeichnet, dass** das Verschweißen der äußeren Oberfläche des Ringmittels (11) mit dem zentralen Loch des ersten Flanschmittels (8) zwischen der äußeren Oberfläche des Ringmittels (11) und der Oberfläche des ersten Flanschmittels (8) um das jeweilige Loch und entgegengesetzt zu dem zweiten Flanschmittel (7) durchgeführt wird.

4. Die Vorrichtung gemäß einem der Ansprüche 1-3, **dadurch gekennzeichnet, dass** die Befestigung des Endbereichs des Rollenmittels (3) an dem zentralen Loch des zweiten Flanschmittels (7) zwischen der äußeren Oberfläche des Endbereichs des Rollenmittels (3) und der Oberfläche des zweiten Flanschmittels (7) um das jeweilige Loch und entgegengesetzt zu dem ersten Flanschmittel (8) durchgeführt wird.

5. Die Vorrichtung gemäß einem der Ansprüche 1 bis 4, **dadurch gekennzeichnet, dass** das Rollenmittel (3), das Ringmittel (11) und zumindest das Flanschmittel (8, 7) aus Metall bestehen,
und die Schweißungen des Endes des Ringmittels (11) an der äußeren Oberfläche des Rollenmittels (3),
der äußeren Oberfläche des Ringmittels (11) zur Oberfläche des ersten Flanschmittels (8) um das jeweilige Loch und entgegengesetzt zu dem zweiten Flanschmittel (7) und
die Befestigung der äußeren Oberfläche des Endbereichs des Rollenmittels (3) an der Oberfläche des zweiten Flanschmittels (7) um das jeweilige Loch und entgegengesetzt zu dem ersten Flanschmittel (8),
werden durch ein solches Schweißen ausgeführt, das das Schmelzen des Grundmetalls und die Zugabe eines metallischen Füllwerkstoffes zur Schweißverbindung ermöglicht.

6. Die Vorrichtung gemäß Anspruch 1, **dadurch gekennzeichnet, dass** das dem Ringmittel (11) benachbarte Ende des Riemenscheibenmittels (9), bestehend aus einem unabhängigen, rohrförmigen zylindrischen Element, an der äußeren Oberfläche des Rollenmittels (3) befestigt ist.

7. Die Vorrichtung gemäß Anspruch 1 oder 2, **dadurch gekennzeichnet, dass** der dem Ringmittel (11) gegenüberliegende innere Endbereich des Riemenscheibenmittels (9) mit dem Rollenmittel (3) mit einem reduzierten Spielraum fluchtet.

8. Die Vorrichtung gemäß Anspruch 1 oder 2, **dadurch gekennzeichnet, dass** das Riemenscheibenmittel (9) eine Zahnriemenscheibe für Zahnriemen ist.

9. Die Vorrichtung gemäß Anspruch 8, **dadurch gekennzeichnet, dass** das Riemenscheibenmittel (9) zwei Zahnsätze für zwei Riemen aufweist.

10. Die Vorrichtung gemäß Anspruch 1 oder 2, **dadurch gekennzeichnet, dass** jedes rohrförmige zylindrische Element (6) des ersten und zweiten lateralen Radmittels (4, 5) jeweils mit einer rutschhemmenden Kunststoffbeschichtung ausgestattet ist.

11. Die Vorrichtung gemäß Anspruch 1 oder 2, **dadurch gekennzeichnet, dass** das zweite Flanschmittel (7) in Bezug auf das jeweilige rohrförmige zylindrische Element (6) radial vorsteht.

12. Die Vorrichtung gemäß Anspruch 1 oder 2, **dadurch gekennzeichnet, dass** die inneren Endbereiche des Rollenmittels (3) aus einem Gehäuse für jeweils frei rotierende Lager bestehen.

13. Die Vorrichtung gemäß einem der vorhergehenden Ansprüche, **dadurch gekennzeichnet, dass** das erste Flanschmittel (8) zumindest des ersten lateralen Radmittels (4) konkav ausgebildet ist und die Konkavität dem gegenüberliegenden zweiten lateralen Radmittel (5) zugewandt ist.

14. Verfahren zum Herstellen einer Vorrichtung gemäß den Ansprüchen 1 bis 14, **gekennzeichnet durch**:
- das Riemenscheibenmittel (9) und das Ringmittel (11) auf das Rollenmittel (3) aufsetzen und diese (9, 11) mit dem Rollenmittel (3) verschweißen;
- das erste laterale Radmittel (4) auf die jeweiligen Endbereiche des Rollenmittels (3) aufsetzen und das erste Flanschmittel (8) mit dem Ringmittel (11) verschweißen;
- das verbleibende zweite Flanschmittel (7) des ersten lateralen Radmittels (4) mit dem Rollenmittel (3) verschweißen;
- das zweite laterale Radmittel (5) an den Endbereich des Rollenmittels (3) entgegengesetzt zu dem ersten lateralen Radmittel (4) einsetzen und verschweißen.

## Revendications

1. Dispositif à rouleau entraîné pour transporteurs à rouleaux comprenant un moyen de rouleau cylindrique et tubulaire (3) tournant autour de son axe géométrique et ayant à chaque extrémité des premier (4) et second (5) moyens de roue latérale respectifs ; au moins le premier moyen de roue a un élément cylindrique tubulaire (6) ayant à son extrémité faisant face au second moyen de roue (5) un premier moyen de bride (8) et à l'extrémité opposée un second moyen de bride (7), les moyens de bride (8, 7) ayant tous les deux la forme d'un anneau, ledit dispositif (1) comprend en outre un moyen de poulie (9) fixé à la surface externe du moyen de rouleau (3) adjacente au premier moyen de roue (4) pour transmettre au dispositif, par l'intermédiaire d'une courroie ou analogue, un mouvement de rotation axial ; ledit dispositif (1) étant **caractérisé par le fait qu'**il comprend un moyen de bague (11) dont la longueur axiale se situe dans une plage allant de deux tiers à un vingtième de la distance axiale entre lesdits premier (8) et second (7) moyens de bride du premier moyen de roue (4), la surface externe du moyen de bague (11) est engagée et soudée à un trou central du premier moyen de bride (8), une extrémité du moyen de bague (11) est placée entre les premier (8) et second (7) moyens de bride et ladite extrémité est soudée à la surface externe du moyen de rouleau (3) dont une partie d'extrémité est fixée au trou central du second moyen de bride (7).

2. Dispositif à rouleau entraîné pour transporteurs à rouleaux comprenant un moyen de rouleau cylindrique et tubulaire (3) tournant autour de son axe géométrique et ayant à chaque extrémité des premier (4) et second (5) moyens de roue latérale respectifs ; au moins le premier moyen de roue a un élément cylindrique tubulaire (6) ayant à son extrémité faisant face au second moyen de roue (5) un premier moyen de bride (8) et à l'extrémité opposée un second moyen de bride (7), les moyens de bride (8, 7) ayant tous les deux la forme d'un anneau, ledit dispositif (1) comprend en outre un moyen de poulie (9) fixé à la surface externe du moyen de rouleau (3) adjacente au premier moyen de roue (4) pour transmettre au dispositif, par l'intermédiaire d'une courroie ou analogue, un mouvement de rotation axial ; ledit dispositif (1) étant **caractérisé par le fait qu'**il comprend un moyen de bague (11) consistant en un élément tubulaire cylindrique réalisé d'un seul tenant avec le moyen de poulie (9) et se projetant à partir de l'extrémité de ce dernier adjacente au premier moyen de roue (4), la longueur axiale du moyen de bague (11) se situe dans une plage allant de deux tiers à un vingtième de la distance axiale entre lesdits premier (8) et second (7) moyens de bride du premier moyen de roue (4), la surface externe du moyen de bague (11) est engagée et soudée à un trou central du premier moyen de bride (8), une extrémité du moyen de bague (11) est placée entre les premier (8) et second (7) moyens de bride et ladite extrémité est soudée à la surface externe du moyen de rouleau (3) dont une partie d'extrémité est fixée au trou central du second moyen de bride (7).

3. Dispositif selon la revendication 1 ou 2, **caractérisé par le fait que** le soudage de la surface externe du moyen de bague (11) au trou central du premier moyen de bride (8) est réalisé entre ladite surface externe du moyen de bague (11) et la surface du premier moyen de bride (8) autour du trou respectif et à l'opposé du second moyen de bride (7).

4. Dispositif selon l'une quelconque des revendications 1 à 3, **caractérisé par le fait que** la fixation de la partie d'extrémité du moyen de rouleau (3) au trou central du second moyen de bride (7) est réalisée entre la surface externe de la partie d'extrémité du moyen de rouleau (3) et la surface du second moyen de bride (7) autour du trou respectif et à l'opposé du premier moyen de bride (8).

5. Dispositif selon l'une quelconque des revendications 1 à 4, **caractérisé par le fait que** le moyen de rouleau (3), le moyen de bague (11) et au moins les moyens de bride (8, 7) sont faits de métal et les soudages de l'extrémité du moyen de bague (11) à la surface externe du moyen de rouleau (3), de la surface externe du moyen de bague (11) à la surface du premier moyen de bride (8) autour du trou respectif et à l'opposé du second moyen de bride (7), et la fixation de la surface externe de la partie d'extrémité du moyen de rouleau (3) à la surface du second moyen de bride (7) autour du trou respectif et à l'opposé du premier moyen de bride (8), sont réalisés par le soudage du type qui prévoit la fonte du métal de base et l'ajout au joint d'un matériau d'apport métallique.

6. Dispositif selon la revendication 1, **caractérisé par le fait que** l'extrémité du moyen de poulie (9) adjacente au moyen de bague (11), consistant en un élément cylindrique tubulaire indépendant, est fixée à la surface externe du moyen de rouleau (3).

7. Dispositif selon la revendication 1 ou 2, **caractérisé par le fait que** la partie d'extrémité interne du moyen de poulie (9) à l'opposé du moyen de bague (11) correspond au moyen de rouleau (3) avec un jeu réduit.

8. Dispositif selon la revendication 1 ou 2, **caractérisé par le fait que** le moyen de poulie (9) est un type de poulie de synchronisation pour courroies synchrones.

9. Dispositif selon la revendication 8, **caractérisé par le fait que** le moyen de poulie (9) a deux ensembles de dents pour deux courroies.

10. Dispositif selon la revendication 1 ou 2, **caractérisé par le fait que** chaque élément cylindrique tubulaire (6) des premier et second moyens de roue latérale (4, 5) comprend un revêtement synthétique antidérapant respectif.

11. Dispositif selon la revendication 1 ou 2, **caractérisé par le fait que** le second moyen de bride (7) fait radialement saillie par rapport à l'élément cylindrique tubulaire indépendant (6).

12. Dispositif selon la revendication 1 ou 2, **caractérisé par le fait que** les parties d'extrémité internes du moyen de rouleau (3) consistent en un logement pour des paliers à rotation libre respectifs.

13. Dispositif selon l'une quelconque des revendications précédentes, **caractérisé par le fait que** le premier moyen de bride (8) au moins du premier moyen de roue latérale (4) est de forme concave avec la concavité dirigée vers le second moyen de roue latérale opposé (5).

14. Procédé de fabrication d'un dispositif selon les revendications 1 à 14, **caractérisé par** :
- introduire le moyen de poulie (9) et le moyen de bague (11) sur le moyen de rouleau (3) et les (9, 11) souder audit moyen de rouleau (3) ;
- introduire le premier moyen de roue latérale (4) sur la partie d'extrémité respective du moyen de rouleau (3) et souder le premier moyen de bride (8) au moyen de bague (11) ;
- souder le second moyen de bride restant (7) du premier moyen de roue latérale (4) au moyen de rouleau (3) ;
- introduire et souder le second moyen de roue latérale (5) à la partie d'extrémité du moyen de rouleau (3) à l'opposé du premier moyen de roue latérale (4).
